# EUROPÄISCHE PATENTSCHRIFT

(11) **EP 3 568 676 B1**
(45) Veröffentlichungstag und Bekanntmachung des Hinweises auf die Patenterteilung: **01.03.2023**
(21) Anmeldenummer: 17832906.6
(22) Anmeldetag: 18.12.2017
(51) Int. Cl.: G01H 11/08, G01H 1/00

(54) **PIEZOELEKTRISCHE FOLIE MIT ELEKTRISCHEM FILTER ZUR SELEKTIVEN ERFASSUNG VON SCHWINGUNGEN AN BAUTEILEN**
PIEZOELECTRIC FILM HAVING ELECTRICAL FILTER FOR SELECTIVELY DETECTING VIBRATIONS IN COMPONENTS
FEUILLE PIÉZO-ÉLECTRIQUE AVEC FILTRE ÉLECTRIQUE POUR UNE DÉTECTION SÉLECTIVE DE VIBRATIONS DANS DES ÉLÉMENTS DE CONSTRUCTION

(30) Priorität: 13.01.2017 DE 102017100573
(43) Veröffentlichungstag der Anmeldung: 20.11.2019
(73) Patentinhaber: Schaeffler Technologies AG & Co. KG, 91074 Herzogenaurach (DE)
(72) Erfinder: HERING, Joachim, 97078 Würzburg (DE); KESSLER, Hans-Willi, 52379 Langerwehe (DE); KRAM, Martin, 97447 Gerolzhofen (DE)
(86) Internationale Anmeldenummer: PCT/DE2017/101081
(87) Internationale Veröffentlichungsnummer: WO 2018/130240

(56) Entgegenhaltungen:
- JP-A- 2015 014 535
- KR-A- 20070 021 325
- US-A- 6 076 405
- US-A1- 2015 198 966
- US-B1- 6 510 738

## Beschreibung

Die Erfindung betrifft eine Detektoranordnung, die es ermöglicht, Schwingungen an feststehenden oder rotierenden Bauteilen, insbesondere an Maschinenelementen zu messen, besonders bevorzugt unter Berücksichtigung der Frequenz. Die Detektoranordnung bedient sich dabei einer piezoelektrischen Folie oder einer Folie, die mit einem piezoelektrischen Material beschichtet wurde.

Ganz allgemein sind Schwingungen als wiederholte zeitliche Schwankungen von Zustandsgrößen eines Systems beschrieben. In einem speziellen Fall ist das System eine Maschine oder ein Bauteil einer Maschine. Das System kann gewollt in Schwingung versetzt werden, wenn man die Schwingfunktion gezielt nutzen möchte, wie beispielsweise bei Schwingschleifern oder Schwingförderern. In vielen Anwendungen sind Schwingungen aber nur innerhalb eines vorgegebenen Bereiches oder in einer gewissen Intensität für das System normal und tolerierbar. Schwingungswerte, die außerhalb bauteil- oder anwendungsspezifischer Grenzen liegen, sind meist als schädigend einzustufen oder sogar bereits ein Indikator für eingetretenen Verschleiß oder Schädigung, die im weiteren Verlauf zum Versagen eines Bauteils oder einer Maschine führen können. Daher ist es von großem Interesse, Schwingungen am Bauteil oder an der Maschine zu erfassen, um mit den erhobenen Daten beispielsweise den Maschinenbetrieb zuverlässig zu gestalten oder sogar ein Ausfallen von Maschinenteilen vorhersagen zu können.

Aus dem Stand der Technik sind Apparaturen bekannt, die die Schwingungen an Maschinen und Bauteilen aus den Eingangsgrößen Weg, Geschwindigkeit oder Beschleunigung ermitteln. Apparaturen zur Schwingungsmessung basieren beispielsweise auf Wirbelstromverfahren, optischen Messverfahren, induktiven, piezoresistiven sowie piezoelektrischen Messverfahren. Zur Umsetzung piezoelektrischer Messverfahren ist der Einsatz piezoelektrisch-aktiver Werkstoffe nötig. Dem Fachmann sind neben Keramiken auch Kristalle und Halbleitertechnologien mit beschichteten Silizium-Oberflächen als geeignete Werkstoffe bekannt. Ein Werkstoff, der ebenfalls piezoelektrische Eigenschaften aufweist, ist Polyvinylidenfluorid (PVDF). PVDF ist ein thermoplastischer Kunststoff, der durch Spritzgießen zu Formteilen oder durch Extrudieren zu Folien verarbeitet wird. Durch die Polarisation während der Verarbeitung weist PVDF piezoelektrische Eigenschaften in einem nutzbaren Maß auf. Es gehört somit zum Fachwissen, dass Spritzgussteile als auch Folien aus PVDF piezoelektrische Eigenschaften aufweisen, weshalb sie in unterschiedlichen Bereichen beispielsweise als Sensor zum Einsatz kommen, insbesondere wenn der zur Verfügung stehende Bauraum begrenzt ist.

Die DE 10 2012 214 229 A1 lehrt eine Zahnradmaschine mit Kraftsensor in Form einer Piezofolie. Die Piezofolie ist an einem Lagerkörper angebracht und zur Erfassung der Kräfte, die auf die Zahnräder wirken ausgebildet. Eine Elektrische Leitung verbindet die Piezofolie mit einer Auswerteeinheit. Nachteilig ist, dass der Sensor aufgrund seines Aufbaues nicht an rotierenden Bauteilen eingesetzt werden kann.

Dem Fachmann ist ebenfalls bekannt, dass Schwingungen durch ihre Frequenzen charakteristisch beschreibbar sind, die in unterschiedlichen Frequenzbereichen auftreten. Beispielsweise weisen, ausgehend von einer drehfrequenten Anregung, an einem rotierenden Bauteil auftretende Schädigungen ein Signal anderer Frequenz auf, als das an einem unbeschädigten rotierenden Bauteil. Mit Frequenzmodifizierung ist eine Auswertung eingegrenzter Frequenzbereiche möglich. Elektrische Schaltungen, die elektrische Signale eines definierten Frequenz-Bereichs annähernd ungeschwächt passieren lassen, sind dem Fachmann bekannt. Solche Schaltungen dienen als frequenzabhängige Filter und sind als Hochpass, als Tiefpass und als Bandpass verfügbar.

Die US 6 076 405 A und die US 6 510 738 B1 beschreiben jeweils eine Detektoranordnung zur selektiven Erfassung von Schwingungen an einem Bauteil.

Vor allem mit Blick auf eine regelmäßige oder permanente Erfassung des Bauteil- oder Maschinenzustandes stellen derzeit bekannte Schwingungsmesssysteme nicht für alle Einsatzbereiche eine zufriedenstellende Lösung dar. Eine Datenauswertung ist auf Grund mangelnder Daten häufig lückenhaft. Eine Aussage über den zukünftigen Zustand fällt schwer. Schwingungs-Messsysteme, die den Forderungen des Condition-Monitoring gerecht werden, sind teuer. Nachteilig ist auch, dass sie meist nicht ohne externe Energieversorgung auskommen, um die Signalaufnahme und Übertragung zu realisieren, insbesondere da die Auswertung von Signalen, z.B. durch FFT-Auswertung, viel Energie verbraucht.

Der vorliegenden Erfindung liegt ausgehend vom Stand der Technik die Aufgabe zugrunde, eine verbesserte Detektoranordnung zur selektiven Erfassung von Schwingungen an einem Bauteil zur Verfügung zu stellen, welcher es gelingt, lückenlos Messdaten zu erfassen und sich als ein autarkes System selbst mit Energie zu versorgen. Weiterhin ist es Aufgabe der Erfindung einen flächendeckenden Einsatz solcher Detektoren in unterschiedlichen Anwendungen auch bei wenig Bauraum zu realisieren, wofür auch ein günstiger Herstellpreis entscheidend ist. Der Detektor soll dazu besonders einfach ausgeführt sein.

Die genannte Aufgabe wird durch eine Detektoranordnung gemäß dem beigefügten Anspruch 1 gelöst.

Die erfindungsgemäße Detektoranordnung dient zur selektiven Erfassung von Schwingungen an einem Bauteil, insbesondere an einem Maschinenteil oder dergleichen. Vorzugsweise dient die Detektoranordnung zur Erfassung der Schwingungen an Wälzlagern. Dafür umfasst die Detektoranordnung eine piezoelektrische Folie, einen elektrischen Filter, einen Ladungsspeicher sowie ein Signalisierungsmittel.

Die piezoelektrische Folie ist mit mindestens einem piezoelektrischen Element ausgerüstet, welches vorzugsweise integraler Bestandteil der Folie ist. Solche piezoelektrischen Folien sind dem Fachmann grundsätzlich bekannt, sodass deren Aufbau nicht detailliert beschrieben werden muss. Die mit dem piezoelektrischen Element ausgerüstete Folie ist so dimensioniert, dass bei den zu erwartenden Schwingungen einer ausreichenden Messempfindlichkeit gegeben ist. Die Folie ist derart an dem Bauteil angebracht, dass auftretende mechanische Schwingungen auf das piezoelektrische Element einwirken. Durch die gewählte Anordnung der Folie wird dem System Energie zur Verfügung gestellt, sodass an den Anschlusselektroden des piezoelektrischen Elementes eine elektrische Ladung mit einer zur mechanischen Schwingung korrelierenden Frequenz entsteht, sobald die Schwingung auftritt. Eine externe Energieversorgung ist dafür nicht erforderlich. Dafür erweist sich eine flächige hinreichend große Anbringung der Folie an dem Bauteil als vorteilhaft, beispielsweise durch Aufkleben der Folie am Bauteil. Vorzugsweise wird die Fläche der Folie nach der erwarteten Frequenz und Intensität derart ausgelegt, dass genügend Energie für den Detektor zur Verfügung steht.

Der elektrische Filter dient zum Herausfiltern eines Ladungsanteils aus der durch das piezoelektrische Element bereit gestellten Ladung. Dafür ist der elektrische Filter an das piezoelektrische Element angeschlossen. Der herausfilterbare Ladungsanteil weist eine vorgegebene Frequenz bzw. einen Frequenzbereich auf, die mit der beobachteten Schwingung korreliert. Somit ist es auch möglich Rohsignalanteile und Hüllkurvensignalanteile z. B. in gleichen Frequenzbereichen gleichzeitig zu ermitteln. Der Vergleich dieser unterschiedlichen Signalaufbereitungsverfahren liefert wertvolle Aussagen zu der Art einer Frequenzanregung (z. B. stoßförmig oder sinusförmig) und damit zur eventuellen Schadensart.

Soweit nachfolgend nur von Frequenzen gesprochen wird, schließt dies auch die Berücksichtigung eines mehr oder weniger breiten Frequenzbereiches mit ein, der nach dem spezifischen Anwendungsfall ausgewählt werden kann.

In einem sehr einfachen Anwendungsfall wird beispielsweise nur der Frequenzbereich von 0 bis 1kHz im Rohsignal herausgefiltert und dieses Signal bewertet. Die höherfrequenten Frequenzanteile werden als Energielieferanten für das System genutzt. In einem weiteren Anwendungsfall ist es denkbar, dass mehrere Frequenzbereiche parallel betrachtet werden. Ein derartiges Anwendungsbeispiel liegt vor, wenn man einfache Stoßanregungen (z. B. resultierend aus einer Unwucht) von Lager- und Verzahnungsanregungen separieren möchte. In diesem Fall ist es dann ggf. notwendig eine separate piezoelektrische Folie als reinen Energiegenerator einzusetzen oder eine externe Energiequelle zu verwenden, da unter Umständen die Energie in den verbleibenden Frequenzbereichen zum Betrieb des Detektors nicht mehr ausreichend ist.

Der Filter kann auch als eine Kombination einfacher Filter aufgebaut sein, um beispielsweise die Hüllkurve über einen Hochpass, Gleichrichtung und Tiefpass zu bilden. Der Filter kann in einfachen Fällen durch andere elektrische Schaltungsmöglichkeiten gebildet sein, womit Rohsignaldaten direkt mit Hüllkurvendaten in gleichen Frequenzbereichen verglichen werden können.

Der in Abhängigkeit von der vorgegebenen Frequenz herausgefilterte Ladungsanteil wird in dem Ladungsspeicher akkumuliert. Dafür ist der Ladungsspeicher an den elektrischen Filter angeschlossen. Der Ladungsspeicher summiert somit die von der piezoelektrischen Folie erzeugten und vom Filter selektierten Ladungen über die Zeit auf. Der Wert der Ladungen auf dem Ladungsspeicher ist somit ein Maß für das Auftreten von bestimmten Schwingungen am überwachten Bauteil, an welchem die Folie angebracht ist. Sobald ein vorbestimmter Ladungsgrenzwert am Ladungsspeicher erreicht ist, wird mittels eines Signalisierungsmittels ein elektrisches Signal generiert. Der frequenzselektive Energieertrag pro Zeiteinheit liefert schon als Historienwert wertvolle Erkenntnisse. Vergleicht man ihn für mehrere baugleiche Aggregate so lassen sich weitere, detailliertere Aussagen zum Maschinenzustand treffen. In besonders vorteilhafter Ausgestaltung wird diese Größe dann noch auf die Maschinenleistung bezogen. Durch den beschriebenen Aufbau erfolgt somit am Ladungsspeicher das Sammeln von Energie über die Zeit. Bei bestimmten Ausführungsformen kann der Eigenenergieverbrauch des Detektors als Variable für einen bei normaler Schwingung konstanten Pegel dienen, sodass am Ladungsspeicher nur bei unerwarteten Schwingungswerten der Ladungsgrenzwert erreicht wird.

Durch diesen Aufbau kann in vorteilhafter Weise ein Sensor realisiert werden, der permanent Werte zu auftretenden Schwingungen liefern kann, kostengünstig herzustellen ist, einen einfachen Aufbau aufweist und vor allem in begrenzten Bauräumen eingesetzt werden kann. Die Auswertung der erfassten Schwingungen ermöglicht in einem bisher nicht zur Verfügung stehenden Umfang spezifische Rückschlüsse auf den Bauteilzustand einer Maschine und damit auf mögliche Schädigungen durch Verschließ, Materialversagen oder Montagefehler.

In einer ersten bevorzugten Ausführungsform weist die Detektoranordnung mehrere unterschiedliche elektrische Filter auf. Um Schwingungen sowohl mit hoher bis hin zu niederer Frequenz zu erfassen, ist einer der Filter bevorzugt als Hochpass, einer als Bandpass und einer als Tiefpass ausgebildet. Hochpässe sind in aller Regel dazu ausgebildet, Frequenzen oberhalb einer Grenzfrequenz herauszufiltern, hingegen filtern Tiefpässe in aller Regel Frequenzen unterhalb einer Grenzfrequenz heraus. Der Bandpass weist hingegen zwischen einer unteren und einer oberen Grenzfrequenz einen Bereich auf, in dem Frequenzen herausgefiltert werden. Durch die Kombination der Filter wird eine Detektoranordnung zur Verfügung gestellt, die in einem breiten Anwendungsspektrum unterschiedlicher Frequenzen einsetzbar ist. Zur Akkumulation der herausgefilterten Ladungsanteile weist die Detektoranordnung einen Ladungsspeicher je Filter auf, sowie ein Signalisierungsmittel je Ladungsspeicher. Die Detektoranordnung zeichnet sich nicht nur durch einen vielseitigen Einsatz in ganz unterschiedlichen Frequenzbereichen aus, auch die Anzahl der herausgefilterten Frequenzen ist variabel. Beispielsweise können Erkenntnisse über die Frequenz und die Intensität auftretender Schwingungen gesammelt werden.

Die erfinderische Detektoranordnung eignet sich zum einen für die Erfassung eines vorgegebenen Frequenzbereiches, in der Art, dass nur eines der Signalisierungsmittel dazu ausgebildet ist, beim Erreichen eines vorbestimmten Ladungsgrenzwertes am Ladungsspeicher ein Signal zu generieren. Die Ladung, die nicht dazu dient, den vorgegebenen Ladungsgrenzwert zu erreichen, kann als Aktivierungsladung für das Signalisierungsmittel genutzt werden. Es wird also eine Detektoranordnung bereitgestellt, die sich in vorteilhafter Weise energetisch selbst versorgen kann. Ein Teil der auftretenden mechanischen Schwingungen wird in einer bevorzugten Ausführungsform somit genutzt, um mithilfe der piezoelektrischen Folie die Versorgungsenergie der Anordnung zu erzeugen sowie ggf. in entsprechenden Speichern zwischenzuspeichern, und ein anderer Teil der auftretenden mechanischen Schwingungen wird genutzt, um den Ladungsspeicher zu füllen, der beim Erreichen des Ladungsgrenzwertes ein Signal generiert, um das Auftreten unerwünschter Betriebssituationen zu signalisieren. Die Detektoranordnung ist dadurch dauerhaft wartungsfrei betreibbar und ihre Anwendung an rotierenden Bauteilen ist möglich. Im einfachsten Fall werden passive Filterelemente verwendet, die keine Betriebsenergie benötigen. Soweit aktive Filterschaltungen eingesetzt werden, kann die Betriebsenergie entweder aus einer externen Stromversorgung stammen oder durch Nutzung der von der piezoelektrischen Folie bereitgestellten Ladung gewonnen werden. Bevorzugt werden im letztgenannten Fall die Ladungsanteile verwendet, die nicht aufgrund der zu überwachenden Schwingung resultieren, um den am Ladungsspeicher gespeicherten Werte, also das Messergebnis nicht zu verfälschen.

In einer bevorzugten Weiterbildung eignet sich die Detektoranordnung für die Erfassung mehrere Frequenzbereiche gleichzeitig, wenn mehrere der Signalisierungsmittel dazu ausgebildet sind, um beim Erreichen eines vorbestimmten Ladungsgrenzwertes am Ladungsspeicher elektrische Signale zu generieren. Bei dieser Betriebsart wird ein Großteil der piezoelektrisch erzeugten Ladung den Ladungsspeichern zur Erreichung des vorbestimmten Grenzwertes zugeführt. Dadurch ist es möglich, dass die Ladung, die nicht dazu dient, die vorgegebenen Ladungsgrenzwerte zu erreichen, nicht mehr in ausreichender Menge zur Verfügung steht, um Signale an den Signalisierungsmitteln zu generieren. In diesem Fall ist es erforderlich, dass die Detektoranordnung eine frequenzunabhängige Energiequelle aufweist, die auf der Folie oder außerhalb angeordnet sein kann. Die Energiequelle ist auf der Folie anbringbar oder in die Struktur der Folie integrierbar. Die Energiequelle ist beispielsweise als eine Batterie, eine Solarzelle oder ein Versorgungsanschluss gebildet. Weitere frequenzunabhängige Energiequellen sind denkbar. Der Versorgungsanschluss ist beispielsweise mit einer Batterie, einer Solarzelle oder einem weiteren piezoelektrischen Element verbindbar. Zur Speicherung einer frequenzunabhängig erzeugten Ladung kann ein Speichermittel auf der Folie angeordnet sein. So wird die zum Betreiben des Signalisierungsmittels nötige Energie bereitgestellt. Das Speichermittel ist auf der Folie angebracht oder in die Struktur der Folie integrierbar oder außerhalb der Folie angeordnet.

Erfindungsgemäß ist das Signalisierungsmittel der Detektoranordnung zur kabellosen Übertragung des elektrischen Signals an einen Signalempfänger ausgebildet. Das Signal ist dabei als ein elektrischer Impuls ausgebildet. Der Signalempfänger ist erfindungsgemäß als Impulszähler ausgebildet.

Der Signalempfänger kann beispielsweise von der Detektoranordnung getrennt angeordnet sein. Die getrennte Anordnung bietet sich insbesondere an, wenn das Signal von einem rotierenden auf ein feststehendes Bauteil übertragen wird. Im einfachsten Fall wird ein optisches Signal generiert, welches als Alarmsignal von einem Bediener wahrgenommen werden kann.

Bei feststehenden Bauteilen bietet sich eine Integration des Signalempfängers in die Detektoranordnung an, was eine weiter bevorzugte Ausführungsform darstellt. Es bietet sich bei der integrierten Bauweise weiterhin an, eine an den Signalempfänger anschließbare Auswerteeinheit ebenfalls mit in die Detektoranordnung zu integrieren. Die Auswerteeinheit ist bevorzugt zur Erfassung weiterer Signale mit weiteren Signalempfängern verbindbar und dient zur Auswertung des mindestens einen erfassten Signales. Die permanente Auswertung erlaubt Rückschlüsse auf die Verfassung des Bauteils und kann frühzeitig eine Schädigung an Bauteilen oder Beeinträchtigungen in Bauteilfunktionen aufdecken.

In einer bevorzugten Ausführungsform ist die Folie aus Polyvinylidenfluorid (PVDF), einem transparenten teilkristallinen Fluor-Thermoplast ausgebildet. Zur Herstellung der piezoelektrischen Eigenschaften wird PVDF polarisiert, indem es mechanisch gestreckt und dabei zur Ausrichtung der Dipole einem starken gerichteten elektromagnetischen Feld ausgesetzt wird. Zum Aufbringen von Elektroden ist es üblich, piezoelektrische Folien metallisch zu beschichten. Die verwendete Metallbeschichtung besteht zumeist aus auf die Folie aufgedampften Materialien, beispielsweise Gold- oder Kupfer-Nickel-Legierungen. Im späteren Einsatz wird an diesen Elektroden die der Kraft proportionale Ladungstrennung als elektrisches Messsignal abgegriffen. Ebenso ist es möglich, die PVDF-Folie auf ihrer Ober- und Unterseite mit Leiterbahnen zu versehen. Weiterhin ist es möglich, die Folie selbst als elektrisch leitfähige Folie auszuführen.

Klebeverfahren eignen sich in besonders vorteilhafter Weise zum Aufbringen der Folie auf dem Bauteil. Denkbar ist auch eine zusätzliche Kapselung der Folie mittels Verguss, um beispielsweise einen verbesserten Schutz gegen jedwede Art von Umwelteinflüssen zu erlangen oder in einer explosionsfähigen Atmosphäre das Risiko von Zündquellen zu minimieren.

In einer bevorzugten Ausführungsform weist die Folie mehrere der piezoelektrischen Elemente auf, die in voneinander getrennten Abschnitten der Folie ausgebildet sein können. Auf diese Weise können beispielsweise Schwingungen erfasst werden, die in unterschiedlichen Ausbreitungsrichtungen am Bauteil auftreten. Es stellt weiterhin eine bevorzugte Ausführungsform dar, mehrere der piezoelektrischen Elemente als Stapel ausgebildet anzuordnen, um damit die Messempfindlichkeit zu erhöhen.

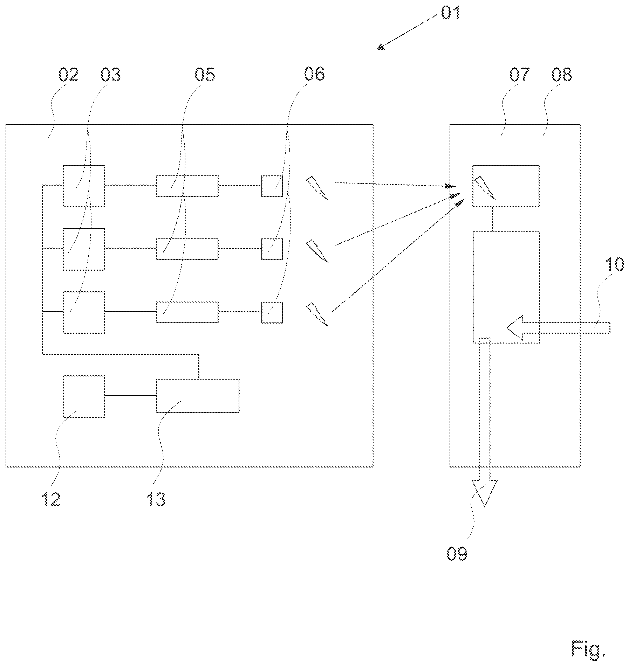

Eine bevorzugte Ausführungsform der Erfindung wird nachfolgend anhand der beigefügten Zeichnung näher erläutert.

Die einzige Figur zeigt eine Prinzipdarstellung des Aufbaus einer erfindungsgemäßen Detektoranordnung 01 zur selektiven Erfassung von Schwingungen an einem Bauteil. Dafür ist die Detektoranordnung 01 auf einem Bauteil (nicht dargestellt), einem Maschinenelement oder dergleichen anbringbar. Die Detektoranordnung 01 umfasst eine piezoelektrische Folie 02.

Die Folie 02 ist mit mindestens einem piezoelektrisch aktiven Element ausgebildet oder sie weist selbst piezoelektrisch aktive Eigenschaften auf und ist zur Bereitstellung einer Ladung ausgebildet, wobei die Ladung mit einer Frequenz auftritt, die zu einer am Bauteil auftretenden mechanischen Schwingung korreliert. Die Ladung wird beispielsweise über eine Anschlusselektrode an der Folie abgegriffen oder durch in die Folie integrierte Leiter weitergeleitet.

Auf der Folie 02 sind im dargestellten Beispiel drei elektrische Filter 03 angeordnet, von denen einer als Hochpass, einer als Tiefpass und einer als Bandpass ausgebildet ist, die der Herausfilterung von Frequenzen aus vorbestimmten Frequenzbereichen dienen. Die elektrischen Filter 03 sind zur Aufnahme der bereitgestellten Ladung mit der Anschlusselektrode (nicht gezeigt) verbunden.

Die Detektoranordnung 01 umfasst im dargestellten Beispiel weiterhin drei Ladungsspeicher 05, die auf der Folie 02 derart angeordnet sind, dass jeder Ladungsspeicher 05 an seinem Eingang mit einem der elektrischen Filter 03 verschaltet ist. Die Ladungsspeicher 05 sind jeweils an ihrem Ausgang mit einem Signalisierungsmittel 06 verschaltet. Dabei bilden immer ein elektrischer Filter 03 ein Ladungsspeicher 05 und ein Signalmittel 06 ein in Reihe angeordnete Verschaltung.

Der Ladungsspeicher 05 speichert den vom piezoelektrischen Element erzeugten, und dann entsprechend einer vorgegebenen Frequenz herausgefilterten Ladungsanteil. Sobald ein vorbestimmter Ladungsgrenzwert am Ladungsspeicher 05 erreicht ist, löst das Signalisierungsmittel 06 einen elektrischen Impuls in Form eines Funksignals aus. Der Impuls wird drahtlos an einen Signalempfänger 07 übertragen. Der Signalempfänger 07 ist dazu ausgebildet, unterschiedliche Signale von unterschiedlichen Filtern 03 zu empfangen. Der Signalempfänger 07 ist mit einer Auswerteeinheit 08 zur Übermittlung der empfangenen Signale verbunden. Die Auswerteeinheit 08 ist zur Aufnahme und Verarbeitung der Signale, die der Signalempfänger 07 bereitstellt, sowie zur Ausgabe der verarbeiteten Signale ausgebildet. Dafür weist die Auswerteeinheit eine Ausgabeschnittstelle 09 auf. Die Auswerteeinheit 08 weist weiterhin einen Aufnahmeschnittstelle 10 zur Aufnahme und Verarbeitung von zusätzlichen Signalen auf, die beispielsweise von einer entfernten Steuereinheit (nicht dargestellt) an die Auswerteeinheit 08 übermittelt werden. Die Ausgabeschnittstelle 09 ist zur Ausgabe verschiedener Signale ausgebildet.

Der Prinzipdarstellung ist zu entnehmen, dass auf der Folie 02 eine Energiequelle 12 angeordnet ist, die zur frequenzunabhängigen Bereitstellung von Betriebsenergie ausgebildet ist. Die Energiequelle 12 ist auf der Folie 02 angebracht oder in die Struktur der Folie 02 integriert. Dafür kann die Energiequelle beispielsweise als eine Batterie, eine Solarzelle oder ein Versorgungsanschluss gebildet sein. Der Versorgungsanschluss ist beispielsweise mit einer Batterie, einer Solarzelle oder einem weiteren piezoelektrischen Element verbindbar. Auf die Energiequelle kann in anderen Ausführungen verzichtet werden, da durch die Folie 02 autark Energie bereit gestellt wird.

Zur Zwischenspeicherung der frequenzunabhängig erzeugten Energie ist ein Speichermittel 13 auf der Folie 02 angeordnet. Das Speichermittel 13 ist mit der Energiequelle 12 und den einzelnen Filtern 03 verschaltet und zur Bereitstellung von Betriebsenergie an die Filter 03 ausgebildet. Das Speichermittel 13 ist auf der Folie 02 angebracht oder in die Struktur der Folie 02 integriert.

### Bezugszeichenliste

- 01: Detektoranordnung
- 02: piezoelektrische Folie
- 03: elektrischer Filter
- 04: -
- 05: Ladungsspeicher
- 06: Signalisierungsmittel
- 07: Signalempfänger
- 08: Auswerteeinheit
- 09: Ausgabeschnittstelle
- 10: Aufnahmeschnittstelle
- 11: -
- 12: Energiequelle
- 13: Speichermittel

## Patentansprüche

1. Detektoranordnung (01) zur selektiven Erfassung von Schwingungen an einem Bauteil, umfassend:
eine mit mindestens einem piezoelektrischen Element ausgerüstete Folie (02), die an dem Bauteil derart angebracht ist, dass auftretende mechanische Schwingungen auf das piezoelektrische Element einwirken, sodass an Anschlusselektroden des piezoelektrischen Elements eine elektrische Ladung mit einer zur mechanischen Schwingung korrelierenden Frequenz bereitsteht;
ein elektrischer Filter (03), der an das piezoelektrische Element angeschlossen ist und den Anteil der bereitgestellten Ladung, welcher einer vorgegebenen Frequenz entspricht, herausfiltert;
einen Ladungsspeicher (05), der an den elektrischen Filter (03) angeschlossen ist und den herausgefilterten Anteil der Ladung akkumuliert und ein in die Folie (02) integrierter Kondensator ist;
die Detektoranordnung **gekennzeichnet durch**
ein Signalisierungsmittel (06), welches ein elektrisches Signal generiert, sobald ein vorbestimmter Ladungsgrenzwert am Ladungsspeicher (05) erreicht ist, und zur kabellosen Übertragung des elektrischen Signals an einen entfernten Signalempfänger (07) ausgebildet ist,
wobei das elektrische Signal als ein elektrischer Impuls gebildet ist und der Signalempfänger (07) als Impulszähler ausgebildet ist, wobei der Signalempfänger (07) mit einer Auswerteeinheit (08) zur Auswertung des erfassten Signals gekoppelt ist.

2. Detektoranordnung (01) nach Anspruch 1, **dadurch gekennzeichnet, dass** sie mehrere elektrische Filter (03) umfasst, insbesondere einen Tiefpass, einen Hochpass und einen Bandpass, wobei jedem elektrischen Filter (03) ein separater Ladungsspeicher (05) und ein separates Signalisierungsmittel (06) zugeordnet ist.

3. Detektoranordnung (01) nach Anspruch 1 oder 2, **dadurch gekennzeichnet, dass** der elektrische Filter (03), der Ladungsspeicher (05) und das Signalisierungsmittel (06) integraler Bestandteil der Folie (02) sind.

4. Detektoranordnung (01) nach einem der Ansprüche 1 bis 3, **dadurch gekennzeichnet, dass** sie weiterhin eine unabhängige Energiequelle (12) zur Versorgung der elektrischen Filter (03) mit Betriebsenergie umfasst.

5. Detektoranordnung (01) nach einem der Ansprüche 1 bis 4, **dadurch gekennzeichnet, dass** die Folie (02) aus Polyvinylidenfluorid PVDF gebildet ist.

6. Detektoranordnung (01) nach einem der Ansprüche 1 bis 5, **dadurch gekennzeichnet, dass** die Folie (02) eine Klebeschicht besitzt, mit welcher sie auf das Bauteil aufklebbar ist.

7. Detektoranordnung (01) nach einem der Ansprüche 1 bis 6, **dadurch gekennzeichnet, dass** die Folie (02), der Filter (03) und der Ladungsspeicher (05) in einer gemeinsamen Vergussmasse verkapselt sind.

## Claims

1. A detector assembly (01) for selectively detecting vibrations in a component, comprising:
a film (02) fitted with at least one piezoelectric element, which is attached to the component in such a way that occurring mechanical vibrations act on the piezoelectric element, such that an electrical charge with a frequency correlating with the mechanical vibration is available at connection electrodes of the piezoelectric element; an electrical filter (03), which is connected to the piezoelectric element and filters out the portion of the provided charge that corresponds to a predefined frequency;
a charge storage means (05), which is connected to the electrical filter (03) and accumulates the filtered-out charge portion and is a capacitor integrated into the film (02);
the detector assembly being **characterised by** a signalling means (06), which generates an electrical signal as soon as a predetermined charge threshold value is achieved at the charge storage means (05) and is configured for wireless transmission of the electrical signal to a remote signal receiver (07),
wherein the electrical signal takes the form of an electrical pulse and the signal receiver (07) is configured as a pulse counter, wherein the signal receiver (07) is coupled to an evaluation unit (08) for evaluating the detected signal.

2. The detector assembly (01) according to claim 1, **characterised in that** it comprises a plurality of electrical filters (03), in particular a low-pass, a high-pass and a band-pass filter, wherein each electrical filter (03) is associated with a separate charge storage means (05) and a separate signalling means (06).

3. The detector assembly (01) according to claim 1 or 2, **characterised in that** the electrical filter (03), the charge storage means (05) and the signalling means (06) are integral components of the film (02).

4. The detector assembly (01) according to any one of claims 1 to 3, **characterised in that** it further comprises an independent energy source (12) for supplying the electrical filter (03) with operating energy.

5. The detector assembly (01) according to any one of claims 1 to 4, **characterised in that** the film (02) is formed from polyvinylidene fluoride PVDF.

6. The detector assembly (01) according to any one of claims 1 to 5, **characterised in that** the film (02) has an adhesive layer with which it can be bonded to the component.

7. The detector assembly (01) according to any one of claims 1 to 6, **characterised in that** the film (02), the filter (03) and the charge storage means (05) are encapsulated in a common potting compound.

## Revendications

1. Agencement détecteur (01) pour détecter sélectivement des vibrations sur un élément de construction, comprenant :
une feuille (02) équipée d'au moins un élément piézoélectrique, laquelle est fixée à l'élément de construction de telle sorte que les vibrations mécaniques se produisant agissent sur l'élément piézoélectrique, de telle sorte qu'une charge électrique d'une fréquence corrélée à la vibration mécanique soit fournie aux électrodes de connexion de l'élément piézoélectrique ; un filtre électrique (03), lequel est connecté à l'élément piézoélectrique et lequel filtre pour l'éliminer la partie de la charge fournie, qui correspond à une fréquence prédéterminée ;
un accumulateur de charge (05), lequel est connecté au filtre électrique (03) et accumule la partie filtrée de la charge et est un condensateur intégré dans la feuille (02) ;
l'agencement détecteur est **caractérisé par** un moyen de signalisation (06), qui génère un signal électrique dès qu'une valeur limite de charge prédéterminée est atteinte au niveau de l'accumulateur de charge (05) et est conçu pour transmettre sans fil le signal électrique à un récepteur de signal (07) distant,
dans lequel le signal électrique est formé sous la forme d'une impulsion électrique et le récepteur de signal (07) est conçu sous la forme d'un compteur d'impulsions, dans lequel le récepteur de signal (07) est couplé à une unité d'évaluation (08) pour évaluer le signal détecté.

2. Agencement détecteur (01) selon la revendication 1, **caractérisé en ce qu'**il comprend plusieurs filtres électriques (03), en particulier un filtre passe-bas, un filtre passe-haut et un filtre passe-bande, dans lequel un accumulateur de charge (05) séparé et un moyen de signalisation (06) séparé sont affectés à chaque filtre électrique (03),

3. Agencement détecteur (01) selon la revendication 1 ou 2, **caractérisé en ce que** le filtre électrique (03), l'accumulateur de charge (05) et le moyen de signalisation (06) font partie intégrante de la feuille (02),

4. Agencement détecteur (01) selon l'une quelconque des revendications 1 à 3, **caractérisé en ce qu'**il comprend en outre une source d'énergie (12) indépendante pour alimenter les filtres électriques (03) en énergie de fonctionnement.

5. Agencement détecteur (01) selon l'une quelconque des revendications 1 à 4, **caractérisé en ce que** la feuille (02) est en polyfluorure de vinylidène PVDF.

6. Agencement détecteur (01) selon l'une quelconque des revendications 1 à 5, **caractérisé en ce que** la feuille (02) présente une couche adhésive au moyen de laquelle elle peut être collée sur l'élément de construction.

7. Agencement détecteur (01) selon l'une quelconque des revendications 1 à 6, **caractérisé en ce que** la feuille (02), le filtre (03) et l'accumulateur de charge (05) sont encapsulés dans une masse de scellement commune.
